Europäisches Patentamt

(19) European Patent Office

Office européen des brevets

(11) Veröffentlichungsnummer: **0 236 564**
**B1**

# (12) EUROPÄISCHE PATENTSCHRIFT

(45) Veröffentlichungstag der Patentschrift:
23.11.88

(21) Anmeldenummer: 86116927.4

(22) Anmeldetag: 05.12.86

(51) Int. Cl.⁴: **B 60 K 23/08**

(54) Schaltvorrichtung für zwei Kupplungen zum Umschalten zwischen einachsigem Standardantrieb und zweiachsigem Allradantrieb bei einem Kraftfahrzeug mit zwei antreibbaren Fahrzeugachsen.

(30) Priorität: 15.01.86 DE 3600873

(43) Veröffentlichungstag der Anmeldung:
16.09.87 Patentblatt 87/38

(45) Bekanntmachung des Hinweises auf die Patenterteilung:
23.11.88 Patentblatt 88/47

(84) Benannte Vertragsstaaten:
ES FR GB IT SE

(56) Entgegenhaltungen:
DE-A-3 013 298
DE-A-3 034 228
DE-A-3 042 562
DE-A-3 241 785
DE-A-3 408 991
DE-C-2 164 324
DE-C-3 516 982
US-A-3 963 085

(73) Patentinhaber: Daimler- Benz Aktiengesellschaft,
Postfach 600202 Mercedesstrasse 136, D-7000
Stuttgart 60 (DE)

(72) Erfinder: Röhringer, Arno, Dipl.- Ing., Gerlinger
Weg 9, D-7257 Ditzingen (DE)
Erfinder: Link, Manfred, Dipl.- Ing., Galgenberg 15,
D-7050 Waiblingen (DE)
Erfinder: Frank, Jürgen, Dipl.- Ing., Danziger
Strasse 124, D-7313 Reichenbach (DE)

**Beschreibung**

Die Erfindung bezieht sich auf eine Schaltvorrichtung nach dem Oberbegriff von Patentanspruch 1.

Eine bekannte Schaltvorrichtung dieser Art (US-PS-3 963 085) ist darauf abgestellt, durch Verwendung einer zusätzlichen Bremse zum Abbremsen eines Zentralrades und Antrieb des Planetenträgers durch den Motor beim zentralen Ausgleichsgetriebe sowohl einen zusätzlichen Allradbetrieb mit ungleicher Momentenaufteilung auf die beiden angetriebenen Fahrzeugachsen als auch einen zusätzlichen Einachs(Hinterachs)antrieb mit overdrive-Effekt zu erreichen. Die Steuereinheit sieht im wesentlichen eine Handsteuerung mittels eines an sich auf das Wechselgetriebe arbeitenden Handschalthebels vor.

Die der Erfindung zugrundeliegende Aufgabe besteht im wesentlichen darin, bei einer Schaltvorrichtung der eingangs genannten Art die Umschaltungen zwar möglichst schnell und weich durchzuführen, aus Gründen der Fahrstabilität jedoch für die Umschaltung in die Schaltstufe für ausgeglichenen Allradantrieb während der Fahrt - insbesondere während Kurvenfahrten - eine Zwischenstufe vorsehen zu können, bei der quasi ein nicht ausgeglichener Allradantrieb geschaltet ist, d.h., beim Einrücken der Kupplung für die Antriebsverbindung der einen Fahrzeugachse soll die Kupplung zum Sperren des Ausgleichsgetriebes beim Beginn der Umschaltung für eine vorbestimmte Zeitspanne zunächst eingerückt bleiben, währenddessen die Drehmomentübertragung der anderen Kupplung gesteigert wird. Unter diesen Umständen muß aber sichergestellt sein, daß der Antriebsmotor nach Ablauf der besagten Zwischenstufe, d.h., mit dem Beginn des Ausrückens der Kupplung zum Sperren des Ausgleichsgetriebes, nicht wegen fehlender Last hochtouren kann.

Die erläuterte Aufgabe ist in vorteilhafterweise mit den kennzeichnenden Merkmalen von Patentanspruch 1 gelöst.

Bei der Schaltvorrichtung nach der Erfindung sind weiche und schnelle Umschaltungen durch die Verwendung von reibschlüssigen Kupplungen und druckmittelbetriebenen Stellgliedern ermöglicht. Die Schaltung der angestrebten Zwischenstufe kann bei der Schaltvorrichtung nach der Erfindung so erfolgen, daß unter Verwendung von zwei gesonderten Schaltventilen das Schaltventil für die Kupplung zum Sperren des Ausgleichsgetriebes durch die Steuereinheit verzögert gegenüber dem der Kupplung für die eine Fahrzeugachse zugeordneten Schaltventil angesteuert wird, so daß zunächst auch die zweite Fahrzeugachse Antriebsdrehmoment aufnimmt und anschließend der Verlauf des Drehmomentabfalles an der Kupplung des zentralen Ausgleichsgetriebes durch die druckabhängig gesteuerten Kennungsventilmittel von dem Drehmomentanstieg der Kupplung der zugeschalteten Fahrzeugachse abhängig gemacht wird.

Die Schaltvorrichtung nach der Erfindung kann unabhängig davon arbeiten, ob die jeweilige Kupplung durch Hilfskraft eingerückt und durch Federkraft ausgerückt oder durch Federkraft eingerückt und durch Hilfskraft ausgerückt wird.

Für die hydraulischen Kennungsventilmittel, welche dazu verwendet sind, eine Kupplung - d.h. eine gegenseitige Abhängigkeit - der Momentenkennungen beider Kupplungen zur Ermöglichung von Lastschaltungen herzustellen, kann die Anordnung insbesondere für den Fall, daß beide Kupplungen durch Druckmittelhilfskraft eingerückt werden, beispielsweise auch so getroffen sein, daß ohne Verwendung einer hydraulischen Verbindung zwischen den Stellgliedern in der Arbeitsdruckleitung wenigstens eines der beiden Stellglieder ein vom Arbeitsdruck des anderen Stellgliedes abhängiges und auf gemeinsame Ansteuerung beider Schaltventile ansprechendes Drosselventil mit veränderlichem Drosselwiderstand eingeschaltet ist.

Durch die Anordnung nach Patentanspruch 2 ist der Anstieg des Kupplungsmomentes der Kupplung für die Antriebsverbindung der einen Fahrzeugachse in der Zwischenstufe relativ flach, dagegen steil beim Übergang in die sich anschließende Schaltstufe für ausgeglichenen Allradantrieb.

Durch die Anordnung nach Patentanspruch 3 ist ein schlagartiger Anstieg des Kupplungsmomentes der Kupplung des zentralen Ausgleichsgetriebes beim Umschalten in den Standardantrieb mit Sicherheit vermieden.

Patentanspruch 4 hat eine vorteilhafte Wirkungsweise der Schaltvorrichtung nach der Erfindung für die Umschaltungen zwischen der Schaltstufe für ausgeglichenen und einer weiteren Schaltstufe für längsgesperrten Allradantrieb zum Gegenstand.

Die Gegenstände der Patentansprüche 5 bis 7 bezwecken ein ständiges Anliegen der Kupplungslamellen auch im ausgerückten Zustand für schnelle Schaltungen der Kupplung für die Zu- und Abschaltung der einen Fahrzeugachse.

Durch den Gegenstand von Patentanspruch 8 wird sichergestellt, daß bei Ausfall der Druckversorgung zwangsläufig ein Schalten in den Standardantrieb erfolgt.

Patentanspruch 9 hat eine vorteilhafte Ausgestaltung der Kennungsventilmittel zum Gegenstand.

Patentanspruch 10 bewirkt eine Vereinfachung durch Mehrfachfunktion eines bestimmten hydraulischen Widerstandes.

Patentanspruch 11 hat eine Sicherheitsschaltung bei Ausfall des Schaltventiles für die Kupplung der einen Fahrzeugachse zum Gegenstand, um bei ausgerückter Kupplung des zentralen Ausgleichsgetriebes zwangsläufig eine Schaltung in den Standardantrieb zu veranlassen.

Durch den Gegenstand von Patentanspruch 12 werden durch auftretendes Kupplungsspiel in der Kupplung für das zentrale Ausgleichsgetriebe bedingte Schaltverzögerungen vermieden

Patentanspruch 13 hat eine Weiterbildung zum Umschalten in eine Schaltstufe für Allradantrieb mit einer quergesperrten Antriebsachse zum Gegenstand.

Die übrigen Patentansprüche 14 bis 20 betreffen weitere vorteilhafte Ausgestaltungen der erfindungsgemäßen Schaltvorrichtung.

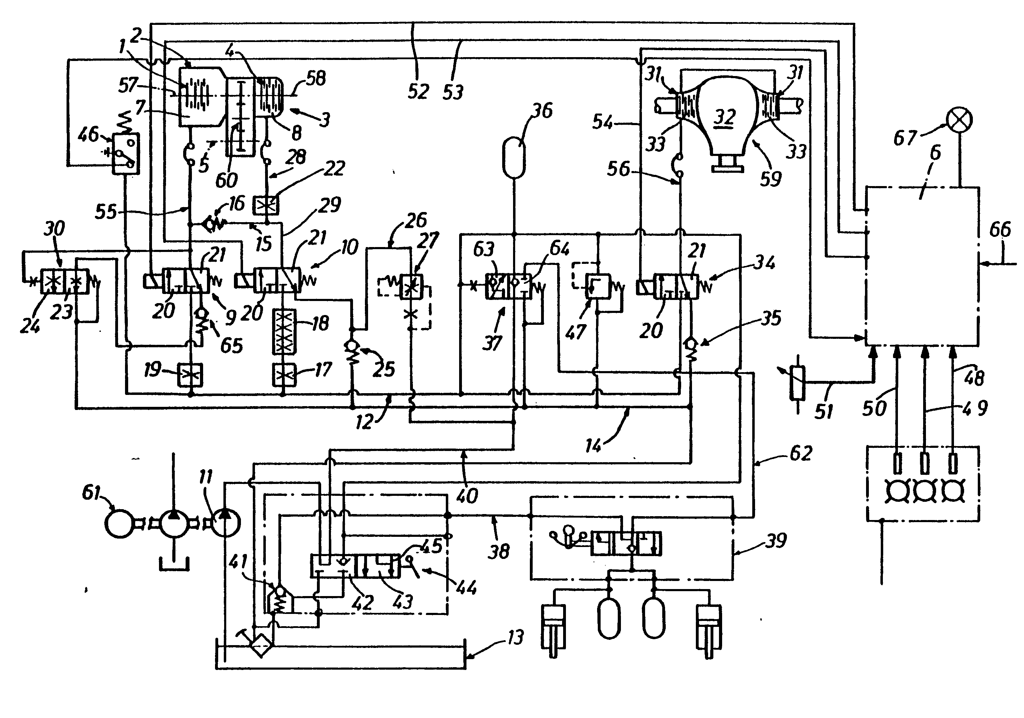

Die Schaltvorrichtung nach der Erfindung ist nachstehend anhand eines in der Zeichnung in Form eines hydraulischen Blockschaltbildes schematisch dargestellten Ausführungsbeispieles näher beschrieben.

Eine elektronische Steuereinheit 6 verarbeitet ein beim Betätigen der Fahrzeugbremsen eines Kraftfahrzeuges ausgelöstes Bremssignal 66, zwei von den beiden Rädern der Vorderachse des Kraftfahrzeuges unter Vermittlung von Drehzahlsensoren ausgelöste Drehzahlsignale 48 und 49, ein vom Achsausgleichsgetriebe 32 der Hinterachse unter Vermittlung eines Drehzahlsensores ausgelöstes Drehzahlsignal 50, welches analog dem arithmetischen Mittel aus den Drehzahlen der beiden Räder der Hinterachse ist, und ein zum Lenkwinkel des Lenkhandrades analoges Signal 51, wie dies in der deutschen Patentanmeldung P-3 505 455 beschrieben ist.

Die Steuereinheit 6 ist ausgangsseitig über Steuerleitungen 52 bis 54 mit elektromagnetischen Schaltventilen 9, 10 und 34 verbunden, welche jeweils in einer von der Steuereinheit 6 ausgelösten Stellung 20 eine Arbeitsdruckleitung 55 bzw. 28 bzw. 56 mit einer Speisedruckleitung 12 verbinden und eine Rücklaufleitung 14 gegenüber der Arbeitsdruckleitung sperren. In einer durch Federkraft geschalteten zweiten Stellung 21 verbinden die Schaltventile 9, 10 und 34 ihre zugehörige Arbeitsdruckleitung 55 bzw. 28 bzw. 56 mit der Rücklaufleitung 14 und sperren die Speisedruckleitung 12 gegenüber der Arbeitsdruckleitung ab.

Das Kraftfahrzeug weist ein Verteilergetriebe 3 mit einer von seinem Antriebsmotor 61 über ein Wechselgetriebe antreibbaren Eingangswelle 57, eine zum Antrieb der Hinterachse 59 verwendete Abtriebswelle 58 und eine zum Antrieb der Vorderachse verwendete Nebenabtriebswelle 5 auf. Das Verteilergetriebe 3 weist ferner ein zentrales Planetenräder-Ausgleichsgetriebe 2 mit einer Lamellen-Kupplung 1, ein Stirnrädergetriebe 60 sowie eine weitere Lamellen-Kupplung 4 auf. Das zentrale Ausgleichsgetriebe 2 ist durch sein äußeres Zentralrad mit der Eingangswelle 57, durch seinen miteinander kämmende Doppelplaneten lagernden Planetenträger mit der Abtriebswelle 58 sowie durch sein inneres Zentralrad mit der einen Kupplungshälfte der Kupplung 4 verbunden, deren andere Kupplungshälfte über das Stirnrädergetriebe 60 mit der Nebenabtriebswelle 5 in Antriebsverbindung steht. Die zum Sperren des zentralen Ausgleichsgetriebes 2 verwendete und zu diesem Zweck mit zwei Getriebegliedern des letzteren verbundene Kupplung 1 wird durch Federkraft eingerückt und durch ein Druckmittel-Stellglied 7 der Axialkolben-Bauart ausgerückt, das an die Arbeitsdruckleitung 55 angeschlossen ist. Die zum Zu- und Abschalten der Vorderachse vom Verteilergetriebe 3 verwendete Kupplung 4 wird durch Federkraft ausgerückt und durch ein Druckmittel-Stellglied 8 der Axialkolben-Bauart eingerückt, das an die Arbeitsdruckleitung 28 angeschlossen ist.

Die Hinterachse 59 ist in der üblichen Weise über ein Achsausgleichsgetriebe 32 antreibbar, das durch zwei parallel geschaltete Lamellen-Kupplungen 31 sperrbar ist, welche jeweils durch Federkraft ausgerückt und durch ein Druckmittel-Stellglied 33 der Axialkolben-Bauart eingerückt werden. Beide Stellglieder 33 sind an die Arbeitsdruckleitung 56 angeschlossen.

Eine vom Antriebsmotor 61 angetriebene Druckmittel-Pumpe 11 saugt aus einem Druckmittel-Vorratsbehälter 13 an und ist über eine Pumpendruckleitung 40 an ein Speicher-Ladeventil 37 angeschlossen. An das Lade-ventil 37 sind weiterhin die Speisedruckleitung 12, die Rücklaufleitung 14 und eine Nebenspeisedruckleitung 62 angeschlossen, von denen letztere zur Druckversorgung einer Niveauregulierung 39 verwendet ist, von der eine Nebenrücklaufleitung 38 zum Vorratsbehälter 13 zurückführt.

Das Ladeventil 37 ist in Abhängigkeit vom Druck der angeschlossenen Speisedruckleitung 12 zwischen einer Stellung 63 und einer Ladestellung 64 umschaltbar. In der Ruhestellung 63 ist die Pumpendruckleitung 40 mit der Nebenspeisedruckleitung 62 verbunden. In der Ladestellung 64 ist die Pumpendruckleitung 40 über ein in Richtung Speisedruckleitung 12 öffnendes Rückschlagventil mit der Speisedruckleitung 12 und dadurch auch mit dem Druckspeicher 36 verbunden.

Das Schaltventil 9 ist durch eine relativ weite Blende 19 mit der Speisedruckleitung 12 und durch ein Drosselventil 30 mit der Rücklaufleitung 14 verbunden, wobei zwischen Schaltventil 9 und Drosselventil 30 ein in Richtung Drosselventil 30 öffnendes Rückschlagventil 65 eingeschaltet ist

Das Drosselventil 30 ist in Abhängigkeit vom Arbeitsdruck des Stellgliedes 7 der Kupplung 1 zwischen zwei Stellungen 23 und 24 umschaltbar. In der Stellung 23 - die das Drosselventil 30 bei Druckwerten kleiner als 25 bar einnimmt - ist eine enge Blende wirksam, während in der bei Druckwerten größer als 25 bar geschalteten Stellung 24 eine weite Blende wirksam ist.

In die Arbeitsdruckleitung 28 des Stellgliedes 8 ist eine relativ weite Blende 22 eingeschaltet, wobei der zum Schaltventil 10 führende Abschnitt 29 der Arbeitsdruckleitung 28 durch eine Kurzschlußleitung 15 mit der Arbeitsdruckleitung 55 verbunden und in die Kurzschlußleitung 15 ein in Richtung Arbeitsdruckleitung 55 sperrendes Rückschlagventil 16 eingeschaltet ist, welches entgegen einer Federvorspannkraft von 4 bar aufsteuerbar ist.

Das Schaltventil 10 ist durch eine Mehrzahl von kaskadenartig hintereinander geschalteter Blenden 17 und 18 mit der Speisedruckleitung 12 und durch ein Druckhalteventil 25 mit der Rücklaufleitung 14 verbunden. Um einen Anlegedruck für die Lamellen von etwa 1,8 bar im Stellglied 8 aufrechterhalten zu können, ist das Druckhalteventil 25 durch eine Ausgleichsleitung 26 über ein Strombegrenzungsventil 27 an die Pumpendruckleitung 40 angeschlossen sowie in die Nebenrücklaufleitung 38 ein weiteres Druckhalteventil 41 eingeschaltet.

Aus Sicherheitsgründen ist die Speisedruckleitung 12 in der üblichen Weise durch ein Druckbegrenzungsventil 47 mit der Rücklaufleitung 14 verbunden, welches bei Druckwerten größer als etwa 38 bar öffnet.

Das Schaltventil 34 ist mit der Speisedruckleitung 12 direkt, dagegen mit der Rücklaufleitung 14 über ein federbelastetes Rückschlagventil 35 verbunden.

In die Pumpendruckleitung 40 ist ein von Hand zwischen einer Betriebsstellung 42 und einer Prüfstellung 43 umschaltbares Serviceventil 44 eingeschaltet. In der Betriebsstellung 42 ist die Pumpe 11 mit dem Ladeventil 37 verbunden. Dagegen sind in der Prüfstellung 43 die Pumpe 11 und das Ladeventil 37 mit dem Vorratsbehälter 13 verbunden. Zur Verbindung der Speisedruckleitung 12 mit dem Vorratsbehälter 13 weist das Serviceventil 44 noch einen Ventildurchgang 45 auf, welcher in der Betriebsstellung 42 abgesperrt und in der Prüfstellung 43 offen ist.

Schließlich ist die Speisedruckleitung 12 an einer mit dem Druckspeicher 36 verbundenen Stelle an einen die Steuereinheit 6 bei Druckwerten kleiner als etwa 5 bar ansteuernden Druckschalter 46 angeschlossen, um ein Signal 67 über den Zustand der Druckversorgung und der Steuereinheit 6 anzeigen zu können.

Unter fahrdynamischen Gesichtspunkten ist die Steuereinheit 6 so konzipiert, daß die beschriebene Schaltvorrichtung zwischen den folgenden Schaltstufen umschaltbar ist:

Schaltstufe "Standardantrieb":

In diesem Antriebszustand ist die Kupplung 1 eingerückt - während die Kupplungen 4 und 31 ausgerückt sind

Schaltstufe "ausgeglichener Allradantrieb":

In diesem Antriebszustand ist lediglich die Kupplung 4 eingerückt - während die Kupplungen 1 und 31 ausgerückt sind.

Schaltstufe "längsgesperrter Allradantrieb":

In diesem Antriebszustand sind die beiden Kupplungen 1 und 4 eingerückt, während die Kupplung 31 ausgerückt ist.

Schaltstufe "Allradantrieb mit einer quergesperrten Fahrzeugachse":

In diesem Fahrzustand sind alle Kupplungen 1, 4 und 31 eingerückt.

Der Versorgungsdruck wird vom Speicher-Ladeventil 37 primär den Schaltventilen 9, 10 und 37 zur Verfügung gestellt. Das Druckniveau liegt zwischen 28 bar und 33 bar. Das Leitungssystem ist durch das Druckbegrenzungsventil 47 abgesichert.

Wird eine Differenzgeschwindigkeit der Räder über die Drehzahlsensoren erkannt, erfolgt das Zuschalten der hydraulisch betätigten Kupplungen und damit auch das Schalten in die jeweiligen Schaltstufen.

Bei einer Umschaltung in die Schaltstufe "ausgeglichener Allradantrieb" werden wegen des zu übertragenden Motordrehmomentes stets die Schaltstufen "Standardantrieb" und "längsgesperrter Allradantrieb" und erst dann die Schaltstufe "ausgeglichener Allradantrieb" geschaltet. Dabei wird zuerst die Kupplung 4 und verzögert die Kupplung 1 geschaltet, so daß ein Hochtouren des Motors verhindert wird. Zunächst sind für die Druckanstiegszeit der Kupplung 4 die Blenden 17, 18 und 22 maßgebend. Wenn der Ansprechdruck des Rückschlagventiles 16 erreicht ist, d.h. 4 bar, sind für die weitere Druckanstiegszeit die Blenden 19 und 22 verantwortlich. Nahezu gleichzeitig erreicht auch die Kupplung 1 ihren Maximaldruck.

Damit ist das Rückschlagventil 16 in zweierlei Hinsicht wichtig. Zunächst kann es zur Variierung der Druckanstieg- und Druckabfallzeit verwendet werden. Weiterhin ist durch das Rückschlagventil eine Sicherheitsschaltung erzielt für den Fall, daß die Kupplung 4 eingerückt und die Kupplung 1 aus gerückt sind und dabei das Schaltventil 10 defekt wird. Unter diesen Umständen erfolgt zwangsläufig ein Umschalten in den "Standardantrieb", weil die Arbeitsdruckleitung 55 über das Rückschlagventil 16 nach der Rücklaufleitung 14 geschaltet ist.

Ausgangspunkt für das Umschalten in die Schaltstufe "längsgesperrter Allradantrieb" ist die Schaltstufe "ausgeglichener Allradantrieb", d.h., beide Schaltventile 9 und 10 sind angesteuert, so daß beide Kupplungen druckbeaufschlagt sind, wobei die Kupplung 4 eingerückt und die Kupplung 1 ausgerückt ist.

Wird nun das Schaltventil 9 angesteuert, dann schaltet es die Kupplung in den drucklosen Zustand. Das von der gespannten Kupplung 1 verdrängte Öl strömt über das Rückschlagventil 65 und die druckabhängig geschaltete Blende 24 schnell zum Vorratsbehälter 13, wobei die Blende 24 auf eine maximale Entleerzeit von 20 sec. $10^{-3}$ ausgelegt ist. Erreicht der Druck einen Wert von ca. 25 bar, so schaltet das Drosselventil 30 auf die Blende 23, wobei die dabei auftretenden Druckspitzen sich wegen des Rückschlagventiles 65 nicht auf die Kupplung 1 auswirken können.

Bei 23 bar beginnt die Kupplung 1 Moment zu übertragen. Der weitere Druckabfall geschieht langsam über die nun kleinere Blende 23, die auf eine Entleerzeit von maximal 1200 sec. $10^{-3}$ ausgelegt ist.

Diese Schaltlogik beim Ansteuern der Kupplung 1 ist notwendig, da beim Ausrücken der Kupplung 1 aus Toleranzgründen Spiel entsteht. Das Drosselventil 30 hat also die Aufgabe, das beim Einrücken der Kupplung 1 vorhandene Spiel so schnell wie möglich zu beseitigen.

Ausgangszustand für eine Umschaltung in die Schaltstufe "Allradantrieb mit einer quergesperrten Fahrzeugachse" ist die Schaltstufe "längsgesperrter Allradantrieb", d.h., das Schaltventil 10 ist angesteuert und das Schaltventil 9 ist stromlos.

Ergibt sich nun durch ein weiteres Schlupfkriterium der Umstand, daß die Hinterachse 59 zu sperren ist, so wird das Schaltventil 34 umgeschaltet. Dabei ist es vorteilhaft, eine Blende in der Arbeitsdruckleitung 56 vorzusehen, um den zeitlichen Momentenverlauf festlegen zu können.

Bei einer Umschaltung in die Schaltstufe "Standardantrieb" aus der Schaltstufe "ausgeglichener Allradantrieb" sind zunächst beide Kupplungen 1 und 4 mit Druck beaufschlagt, d.h., die Kupplung 4 ist eingerückt und die Kupplung 1 ist ausgerückt.

Beispielsweise durch Betätigen der Betriebsbremse werden beide Schaltventile über die Steuereinheit 6 stromlos. Das Ölvolumen der Kupplung 1 versucht so schnell als möglich über die druckabhängige Drossel 30 abzuströmen. Ab ca. 25 bar schaltet diese jedoch auf den kleineren Blendenquerschnitt 23 um. Gleichzeitig strömt das Ölvolumen der Kupplung 4 über die größere Blende 22 und das Rückschlagventil 25 schneller in den Vorratsbehälter 13 ab. Damit kann aber auch der Ölrücklauf von der Kupplung 1 den schnelleren Abflußweg über das Rückschlagventil 16 und das Rückschlagventil 25 nehmen, und zwar solange, wie dies der eingestellte Druck an Rückschlagventil 16 zuläßt.

Damit ist mit dem Rückschlagventil 16 bei dieser Anordnung eine ideale Eingriffsmöglichkeit zum Steuern in die Schaltstufe "Standardantrieb" mit welchen Momenten auf Dauer gegeben.

Ebenso regulierend für den Druckaufbau wirkt das Rückschlagventil 16 beim Schalten in die Schaltstufe "ausgeglichener Allradantrieb", wie dies bereits oben beschrieben worden ist.

Damit beim Schalten in die Schaltstufe "ausgeglichener Allradantrieb" der Momentenaufbau schnell und weich geschehen kann, müssen die Lamellen der Kupplung 4 spielfrei aneinanderliegen. Dies geschieht mit Hilfe des Rückschlagventiles 25, das mit ca. 1,8 bar gegen eine Feder in der Kupplung 4 die Lamellen ständig anliegen läßt. Damit dieser Druck aufrechterhalten bleibt, ist ein Strombegrenzungsventil 27 eingebaut, das Lecköl am Druckhalteventil 25 mit Hilfe des Widerstandsventiles 41 vom Pumpenstrom abzweigt.

Da eine angelegte Kupplung 4 aus Funktionsgründen für den Fahrbetrieb notwendig ist, wie dies vorstehend beschrieben wurde, wird zum vollständigen Trennen der Lamellen der Kupplung das Serviceventil 44 verwendet. Mit diesem Serviceventil 44 muß, wenn das Fahrzeug auf den Bremsen- und Leistungsprüfstand gebracht wird, das Steuerungssystem drucklos gemacht werden. Dies geschieht durch Umlegen eines Hebels am Serviceventil 44 von der Betriebsstellung 42 in die Prüfstellung 43. Damit wird bewirkt, daß der Pumpenstrom wieder direkt zum Vorratsbehälter 13 geführt wird. Gleichzeitig wird ein Rückschlagventil mechanisch geöffnet. Der Druckspeicher 36 wird über den Ventildurchgang 45 entleert. Außerdem wird der Druckabbau der vorgespannten Kupplung 4 über eine im Getriebe eingebaute Feder unterstützt. Ist der Systemdruck abgebaut, so wird mit Hilfe des Druckschalters 46 eine Störungsanzeige 67 zum Aufleuchten gebracht. Der Druckschalter 46 überwacht auch die Verfügbarkeit der Hydraulik. Sein Schaltpunkt ist auf 5 bar festgelegt. Das Durchfahren des Druckbereiches 5 bar bis 0 bar wird für die Störungsanzeige mit einem Zeitglied abgedeckt. Wenn die Störungsanzeige 67 aufleuchtet, ist gleichzeitig zur drucklosen Hydraulik auch die Steuerelektronik 6 außer Funktion gesetzt. Hydraulik gegen 0 bar bedeutet, daß die Schaltstufe "Standardantrieb" geschaltet ist. Auf diese Weise kann das Fahrzeug auf dem Bremsen - und Leistungsprüfstand problemlos geprüft werden. Nach Abschluß des Prüfvorganges muß das Serviceventil 44 wieder in die Betriebsstellung 42 gebracht werden.

Das Serviceventil 44 kann im Motorraum gut zugänglich untergebracht werden. Durch einfaches Umlegen eines Hebels in die Prüfstellung 43 wird die nicht gewünschte Zuschaltung während der achsweisen Prüfung nach § 29 StVZO (Prüfung der Betriebsbremse) bzw. das Abmontieren einer Gelenkwelle bei Fahrzeugen mit permanenten Allradantrieb vermieden.

**Patentansprüche**

1. Schaltvorrichtung für eine mit Reibschluß arbeitende Kupplung (1) zum Sperren eines zentralen Planetenräder-Ausgleichsgetriebes (2) eines Verteilergetriebes (3) zum Antrieb von zwei Fahrzeugachsen eines Kraftfahrzeuges und für eine mit Reibschluß arbeitende Kupplung (4) für die Antriebsverbindung zwischen dem Verteilergetriebe (3) und der einen Fahrzeugachse, die in Abhängigkeit von einer Steuereinheit (6) und unter Verwendung je eines sowohl mit hydraulischer Druckmittelhilfskraft betriebenen als auch durch je ein von der Steuereinheit ansteuerbares Schaltventil (9, 10) entweder mit einer von einer Druckquelle versorgten Speisedruckleitung oder mit einer zu einem im wesentlichen druckentlasteten Vorratsbehälter (13) führenden Rücklaufleitung verbundenen Stellgliedes (7, 8) zur Betätigung der Kupplungen zwischen einer Schaltstufe für einachsigen Standardantrieb - in welcher die Kupplung (31) des Ausgleichsgetriebes (32) eingerückt und die andere Kupplung (1, 4) ausgerückt ist - und einer Schaltstufe für ausgeglichenen Allradantrieb - in welcher die Kupplung (31) des Ausgleichsgetriebes ausgerückt und die andere Kupplung (4, 1) eingerückt ist - umschaltbar ist,
dadurch gekennzeichnet,
daß die Stellglieder (7, 8) gegenseitig durch hydraulische Kennungsventilmittel (15, 16) in Wirkung bringbar sind, die ausschließlich beim Ansteuern beider Schaltventile (9, 10) ansprechen und in Abhängigkeit vom Arbeitsdruck wenigstens eines der Stellglieder (7, 8) derart arbeiten, daß das Kupplungsmoment der jeweils auszurückenden Kupplung (1 bzw. 4) lediglich in dem Maße abnimmt, wie das Kupplungsmoment der jeweils einzurückenden Kupplung (4 bzw. 1) zunimmt

2. Schaltvorrichtung nach Anspruch 1,
dadurch gekennzeichnet,
daß das Stellglied (8) der Kupplung (4) für die eine Fahrzeugachse mit der Speisedruckleitung (12) sowohl über einen zwischen das zugehörige Schaltventil (10) und die Speisedruckleitung (12) eingeschalteten größeren Drosselwiderstand (Blenden 17, 18) als auch über einen parallelen kleineren Drosselwiderstand (19) verbindbar und der kleinere Drosselwiderstand (19) ausschließlich in der das Ausrücken der Kupplung (1) des Ausgleichsgetriebes (2) veranlassenden Stellung (20) des zugehörigen anderen Schaltventiles (9) auf das Stellglied (8) der Kupplung (4) fur die eine Fahrzeugachse geschaltet ist.

3. Schaltvorrichtung nach Anspruch 1 oder 2,
dadurch gekennzeichnet,
daß das Stellglied (8) der Kupplung (4) für die eine Fahrzeugachse bei der Umschaltung in die Schaltstufe für Standardantrieb über wenigstens einen Drosselwiderstand (Blende 22) mit der Rücklaufleitung (14) verbunden ist.

4. Schaltvorrichtung nach einem der Ansprüche 1 bis 3, die in Abhängigkeit von der Steuereinheit zwischen der Schaltstufe für ausgeglichenen Allradantrieb und einer weiteren Schaltstufe für längsgesperrten Allradantrieb - in welcher beide Kupplungen eingerückt sind - umschaltbar ist,
dadurch gekennzeichnet,
daß das Schaltventil (9) für das Stellglied (7) der Kupplung (1) des Ausgleichsgetriebes (2) jeweils über wenigstens einen Drosselwiderstand (Blende 19 bzw. Drosselventil 30) mit der Speisedruckleitung (12) und mit der Rücklaufleitung (14) verbunden ist.

5. Schaltvorrichtung nach einem der Ansprüche 1 bis 4,
dadurch gekennzeichnet,
daß wenigstens eines (8) der beiden Stellglieder (7, 8) im Einrücksinne auf seine Kupplung (4) arbeitet und das zugehörige Schaltventil (10) mit der Rücklaufleitung (14) über ein Druckhalteventil (25) verbunden ist.

6. Schaltvorrichtung nach Anspruch 5,
dadurch gekennzeichnet,
daß an das Druckhalteventil (25) eine von der Druckquelle (Pumpe 11) gespeiste Ausgleichsleitung (26) angeschlossen ist.

7. Schaltvorrichtung nach einem der Ansprüche 1 bis 6,
dadurch gekennzeichnet,
daß in die Ausgleichsleitung (26) ein Strombegrenzungsventil (27) eingeschaltet ist.

8. Schaltvorrichtung nach einem der Ansprüche 1 bis 7,
dadurch gekennzeichnet,
daß die Kupplung (1) des Ausgleichsgetriebes (2) durch Federkraft, dagegen die Kupplung (4) für die eine Fahrzeugachse durch die Arbeitsdruckkraft ihres Stellgliedes (8) einrückbar ist.

9. Schaltvorrichtung nach Anspruch 8,
dadurch gekennzeichnet,
daß als Kennungsventilmittel ein in einer die beiden Stellglieder (7, 8) miteinander verbindenden Kurzschlußleitung (15) wirkungsmäßig angeordnetes Rückschlagventil (16) verwendet ist, das entgegen einer Vorspannkraft in Richtung des Stellgliedes (8) der Kupplung (4) für die eine Fahrzeugachse vom Arbeitsdruck des anderen Stellgliedes (7) aufsteuerbar ist.

10. Schaltvorrichtung nach einem der Ansprüche 1 bis 9,
dadurch gekennzeichnet,
daß der zwischen die Speisedruckleitung (12) und das Schaltventil (9) für das Stellglied (7) der Kupplung (1) des Ausgleichsgetriebes (2) eingeschaltete Drosselwiderstand (Blende 19) kleiner ist als der Drosselwiderstand (Blenden 17, 18), welcher zwischen die Speisedruckleitung (12) und das andere Schaltventil (10) eingeschaltet ist.

11. Schaltvorrichtung nach einem der Ansprüche 1 bis 10,
dadurch gekennzeichnet,
daß der zwischen das Stellglied (8) der Kupplung (4) fur die eine Fahrzeugachse und die Rücklaufleitung (14) einschaltbare Drosselwiderstand (Blende 22) derart in einer das Stellglied (8) mit seinem Schaltventil (10) verbindenden Arbeitsdruckleitung (28) angeordnet ist, daß das als Kennungsventil verwendete Rückschlagventil (16) mit dem Stellglied (8) über den Drosselwiderstand (Blende 22), dagegen mit dem Schaltventil (10) direkt über den betreffenden Abschnitt (29) der Arbeitsdruckleitung (28) verbunden ist.

12. Schaltvorrichtung nach einem der Ansprüche 1 bis 11,
dadurch gekennzeichnet,
daß der zwischen das Schaltventil (9) des Stellgliedes (7) der Kupplung (1) des Ausgleichsgetriebes (2) und die Rücklaufleitung (14) eingeschaltete Drosselwiderstand (Drosselventil 30) in Abhängigkeit vom Arbeitsdruck des Stellgliedes (7) zwischen einem kleinen Widerstandswert (Blende 24) bei höheren Druckwerten (größer als 25 bar) und einem größeren Widerstandswert (Blende 23) bei Druckwerten unterhalb eines Grenzwertes (25 bar) umsteuerbar ist.

13. Schaltvorrichtung nach einem der Ansprüche 1 bis 12, bei der wenigstens eine Kupplung zum Sperren eines Achsausgleichsgetriebes der im Standardantrieb angetriebenen Fahrzeugachse durch ein Stellglied in Abhängigkeit von der Steuereinheit derart betätigbar ist, das in einer weiteren Schaltstufe für Allradantrieb mit einer quergesperrten Antriebsachse alle drei Kupplungen eingerückt sind, dagegen in den anderen Schaltstufen die Kupplung des Achsausgleichsgetriebes ausgerückt ist,
dadurch gekennzeichnet,
daß das Stellglied (33) der Kupplung (31) des Achsausgleichsgetriebes (32) sowohl mit Druckmittelhilfskraft betrieben als auch durch ein weiteres durch die Steuereinheit (6) ansteuerbares Schaltventil (34) entweder mit der Druckspeiseleitung (12) oder mit der Rücklaufleitung (14) verbunden ist.

14. Schaltvorrichtung nach einem der Ansprüche 1 bis 13,
dadurch gekennzeichnet,
daß das Schaltventil (34) der Kupplung (31) des Achsausgleichsgetriebes (32) über ein Druckhalteventil (35) mit der Rücklaufleitung (14) verbunden ist.

15. Schaltvorrichtung nach einem der Ansprüche 1 bis 14,
dadurch gekennzeichnet,
daß die Speisedruckleitung (12) an einen Druckspeicher (36) angeschlossen ist, der über ein in Abhängigkeit vom Speicherdruck arbeitendes Ladeventil (37) von einer Pumpe (11) aufladbar ist, und daß das Ladeventil (37) zur weiteren Druckversorgung eines vom Antrieb der Fahrzeugachsen unabhängigen sowie mit dem Vorratsbehälter (13) über eine Nebenrücklaufleitung (38) verbundenen Verbrauchers (Niveauregulierung 39) verwendet ist, und daß die Ausgleichsleitung (26) von der von der Pumpe (11) zum Ladeventil (37) führenden Pumpendruckleitung (40) abgezweigt und in die Nebenrücklaufleitung (38) ein Druckhalteventil (41) eingeschaltet ist.

16. Schaltvorrichtung nach einem der Ansprüche 1 bis 15,
dadurch gekennzeichnet,
daß in die Pumpendruckleitung (40) ein zwischen einer die Pumpe (11) mit dem Ladeventil (37) verbindenden Betriebsstellung (42) und einer sowohl die Pumpe (11) als auch das Ladeventil (37) mit dem Vorratsbehälter (13) verbindenden Prüfstellung (43) umschaltbares Serviceventil (44) eingeschaltet ist.

17. Schaltvorrichtung nach einem der Ansprüche 1 bis 16,
dadurch gekennzeichnet,
daß das Serviceventil (44) zur Verbindung der Speisedruckleitung (12) mit dem Vorratsbehälter (13) einen Ventildurchgang (45) aufweist, welcher in der Betriebsstellung (42) abgesperrt und in der Prüfstellung (43) offen ist.

18. Schaltvorrichtung nach einem der Ansprüche 1 bis 17,
dadurch gekennzeichnet,
daß die Speisedruckleitung (12) mit einem auf die Steuereinheit (6) arbeitenden Druckschalter (46) verbunden ist.

19. Schaltvorrichtung nach einem der Ansprüche 1 bis 18,
dadutch gekennzeichnet,
daß die Speisedruckleitung (12) durch ein Druckbegrenzungsventil (47) mit der Rücklaufleitung (14) verbunden ist.

20. Schaltvorrichtung nach einem der Ansprüche 1 bis 19,
dadurch gekennzeichnet,
daß zwischen das Schaltventil (9) der Kupplung (1) des zentralen Ausgleichsgetriebes (2) und das mit der Rücklaufleitung (14) verbundene Drosselventil (30) ein in Richtung Schaltventil (9) sperrendes Rückschlagventil (65) eingeschaltet ist.

**Claims**

1. Shifting device for a clutch (1) operating with frictional engagement for locking a central planet differential gear (2) of a power take-off gear (3) for driving two vehicle axles of a motor vehicle and for a clutch (4) operating with frictional engagement for the drive connection between the power take-off gear (3) and one vehicle axle which, depending on a control unit (6) and using respectively one actuator (7, 8), both operated with hydraulic pressure-medium auxiliary power and also connected by means of respectively one on-off valve (9, 10), can be shifted either to a feed pressure line supplied by a pressure source or to a return duct leading to a substantially pressure-released supply container (13), for the actuation of the clutches between an engagement stage for single-axle standard drive - in which the clutch (31) of the differential gear (32) is engaged and the other clutch (1, 4) is disengaged - and an engagement stage for equalized all-wheel drive - in which the clutch (31) of the differential gear (32) is disengaged and the other clutch (4, 1) is engaged - characterised in that the actuators (7, 8) can be mutually brought into operation by identification valve means (15, 16) which respond exclusively on the controlling of the two on-off valves (9, 10) and, depending upon the working pressure of at least one of the actuators (7, 8) operate in such a manner that the torque of the clutch (1 or 4) to be disengaged in the particular instance decreases only to the extent to which the torque of the clutch (4 or 1) to be engaged in the particular instance increases.

2. Shifting device according to Claim 1, characterised in that the actuator (8) of the clutch (4) for one vehicle axle can be connected with the supply pressure duct (12) both via a bigger choke resistor (diaphragms 17, 18) mounted between the associated on-off valve (10) and the supply pressurs duct (12) and also via a parallel smaller choke resistor (19), and in-that the smaller choke resistor (19) is switched onto the actuator (8) of the clutch (4) for one vehicle axle exclusively in the position (20) of tho associated other on-off valve bringing about the disengagement of the clutch (1) of the differential gear (2).

3. Shifting device according to Claim 1 or 2, characterised in that the actuator (8) of the clutch (4) for one vehicle axle on the change over to the engagement step for standard drive is connected via at least one choke resistor (diaphragm 22) with the return duct (14).

4. Shifting device according to one of Claims 1 to 3 which can be changed over depending upon the control unit between the engagement stage for equalized all-wheel drive and a further engagement stage for longitudinally locked all-wheel drive - in which both clutches are engaged - characterised in that the on-off valve (9) for the actuator (7) of clutch (1) of the differential gear (2) is connected in each instance via at least one choke resistor (diaphragm 19 or throttle valve 30) with the supply pressure duct (12) and the return duct (14).

5. Shifting device according to one of Claims 1 to 4, characterised in that at least one (8) of the two actuators (7, 8) operates in the engagement direction onto its clutch (4) and the associated on-off valve (10) is connected with the return duct (14) via a pressure holding valve (25).

6. Shifting device according to Claim 5, characterised in that an equalizer duct (26) supplied by the pressure source (11) is connected to the pressure holding valve (25).

7. Shifting device according to one of Claims 1 to 6, characterised in that a flow limiting valve (27) is mounted in the equalizer duct (26).

8. Shifting device according to one of Claims 1 to 7, characterised in that the clutch (1) of the differential gear (2) can be engaged by spring force, whereas the clutch (4) for one vehicle axle can be engaged by the working pressure force of its actuator (8).

9. Shifting device according to Claim 8, characterized in that, as an identification valve means, use is made of a return valve (16) operatively mounted in a short-circuiting duct (is) joining the two actuators (7, 8) together and which can be controlled against a tensioning force in the direction of the actuator (8) of the clutch for the one vehicle axle by the working pressure of the other actuator (7).

10. Shifting device according to one of Claims 1 to 9, characterized in that the choke resistor (diaphragm 19) mounted between the supply pressure duct (12) and the on-off valve (9) for the actuator (7) of the clutch (1) of the differential gear (2) is smaller than the choke resistor (diaphragms 17, 18) which are mounted between the supply pressure duct (12) and the other on-off valve (10).

11. Shifting device according to one of Claims 1 to 10, characterised in that the choke resistor (diaphragm 22) which can be mounted between the actuator (8) of the clutch (4) for one vehicle axle and the return duct (14) is mounted a working pressure duct (28) connecting the actuator (8) with its on-off valve (10) in such a manner that the return valve (16) used as identification valve is connected with the actuator (8) via the choice resistor (diaphragm 22) while, on the other hand, it is connected with the on-off valve (10) directly via the portion (29) concerned of the working pressure duct (28).

12. Shifting device according to one of Claims 1 to 11, characterised in that the choke resistor (throttle valve 30) mounted between the on-off valve (9) of the actuator (7) of the clutch (1) of the differantial gear (2) and the return duct (14) is controllable depending on the working pressure of the actuator (7) between a small resistance value (diaphragm 24) on higher pressure values (greater than 25 bar) and a greater resistance value (diaphragm 23) for pressure values below a limit value (25 bar).

13. Shifting device according to one of Claims 1 to 12 in which at least one clutch for locking an axie differential gear of the vehicle axle driven in standard drive is actuatable by means of an actuator depending on tits control unit in such a manner that in a further engagement stage for all-wheel drive with a transversally locked drive axle all three clutches are engaged, while in the other engagement stages the clutch of the axle differential gear is disengaged, characterized in that the actuator (33) of the clutch (31) of the axle differential gear (32) is both operated with pressure medium auxiliary power and connected by means of a further on-off valve (34) controllable by the control unit (6') either with the pressure feed duct (12) or with the return duct (14).

14. Shifting device according to one of Claims 1 to 11, characterised in that the on-off valve (34) of the clutch (31) of the axle differential gear (32) is connected via a pressure holding valve (35) with the return duct (14).

15. Shifting device according to one of Claims 1 to 14, characterised in that the supply pressure duct (12) is connected to a pressure store (36) which can be loaded by a loading valve (37) of a pump (11) operating depending on the store pressure, and in that the loading valve (37) is used for the further supplying of pressure of a user device (level adjustment 39) independent of the drive of the vehicle as well as connected with the supply container (13) through a secondary return duct (38), and in that the equalizer duct (26) of the pump pressure duct (40) leading from the pump (11) to the loading valve (37) is branched and a pressure holding valve (41) is mounted into the secondary return duct (38).

16. Shifting device according to one of Claims 1 to 15, characterised in that a service valve (44) which can be changed over between a working position (42) connecting the pump 11 with the loading valve (37) and a test position (43) connecting both the rump (11) and the loading valve (37) with the supply container (13) is mounted into the pump pressure duct (40).

17. Shifting device according to one of Claims 1 to 10, characterised in that the service valve (44) for the connection of the supply pressure duct (12) with the supply container (13) has a valve passage (45) which is closed in the working position (42) and open in the test position (43).

18. Shifting device according to one of Claims 1 to 17 characterised in that the supply pressure duct (12) is connected with a pressure switch (46) acting on the control unit (6).

19. Shifting device according to one of Claims 1 to 18, characterised in that the supply pressure duct (12) is connected with the return duct (14) via a pressure limiting valve (47).

20. Shifting device according to one of Claims 1 to 11, characterized in that a return valve (65) closing in the direction of the on-off valve (9) is mounted between the on-off valve (9) of the clutch (1) of the central differential gear (2) and the throttle valve (30) connected with the return duct (14).


**Revendications**

1. Dispositif de commutation pour un embrayage (1), travaillant à liaison par frottement, pour bloquer un mécanisme central d'équilibrage (2) à satellites d'un mécanisme répartiteur (3) prévu pour l'entraînement de deux essieux d'un véhicule, ainsi que pour un embrayage (4), travaillant à liaison _par_ frottement, pour la liaison d'entraînement entre le mécanisme répartiteur (3) et l'un des essieux, dispositif de commutation que, pour faire passer les embrayages entre un mode d'entraînement standard sur un seul essieu - dans lequel l'embrayage (31) du mécanisme d'équilibrage (32) est embrayé tandis que l'autre embrayage (1, 4) est débrayé - et un mode d'entraînement équilibré sur toutes les roues - dans lequel l'embrayage (31) du mécanisme d'équilibrage est débrayé tandis que l'autre embrayage (4, 1) est embrayé, on peut faire commuter en fonction d'une unité de commande (6) et en employant un organe de positionnement respectif (7, 8) qui, d'une part, est entraîné par la force d'un fluide hydraulique et, d'autre part, est relié, au moyen d'une vanne de commutation _respective_ (9, 10) que peut activer l'unité de commande, soit avec une conduite d'alimentation sous pression alimentée par une source de pression, soit avec une conduite de retour conduisant à un réservoir (13) essentiellement déchargé de la pression, caractérisé

en ce que les organes de positionnement (7, 8) peuvent être amenés à coopérer mutuellement grâce à des moyens hydrauliques (15, 16) qui sont constitués de clapets à valeur caractéristique d'intervention, qui réagissent exclusivement lorsqu'ils sont activés par les deux vannes de commutation (9, 10) et qui, en fonction de la pression de travail d'au moins l'un des organes de positionnement (7, 8) travaillent de façon telle que le couple transmis par l'embrayage (1 ou 4) qu'il faut respectivement débrayer ne décroît que dans la mesure où le couple transmis par l'embrayage (4 ou 1) qu'il faut respectivement embrayer croît.

2. Dispositif de commutation selon la revendication 1, caractérisé

en ce que l'organe de positionnement (8) de l'embrayage (4) du premier essieu peut être relié avec la conduite d'alimentation sous pression (12) d'une part par l'intermédiaire d'une plus grande résistance d'étranglement (diaphragmes 17, 18) montée entre la vanne de commutation correspondante (10) et la conduite d'alimentation sous pression (12) et d'autre part par l'intermédiaire d'une plus petite résistance d'étranglement parallèle (19); et en ce que la plus petite résistance d'étranglement (19) n'est mise en circuit avec l'élément de positionnement (8) de l'embrayage (4) du premier essieu qu'exclusivement si l'autre vanne de commutation correspondante (9) se trouve dans la position (20) qui autorise le débrayage (1) du mécanisme d'équilibrage (2).

3. Dispositif de commutation selon la revendication 1 ou 2, caractérisé

en ce que, lors de la commutation en mode entraînement standard, l'organe de positionnement (8) de l'embrayage (4) du premier essieu est relié à la conduite de retour (14) par l'intermédiaire d'au moins une résistance d'étranglement (diaphragme 22).

4. Dispositif de commutation selon l'une des revendications 1 à 3, qui, en fonction de l'unité de commande, peut commuter entre le mode correspondant à l'entraînement équilibré sur toutes les roues et un autre mode correspondant à l'entraînement sur toutes les roues avec blocage longitudinal du mécanisme d'équilibrage entre l'essieu avant et l'essieu arrière - dans lequel les deux embrayages sont embrayés- ,

caractérisé en ce que la vanne de commutation (9) de l'organe de positionnement (7) de l'embrayage (1) du mécanisme d'équilibrage (2) est respectivement reliée avec la conduite d'alimentation sous pression (12) et avec la conduite de retour (14) par l'intermédiaire d'au moins une résistance d'étranglement (diaphragme 19 ou vanne d'étranglement 30).

5. Dispositif de commutation selon l'une des revendications 1 à 4, caractérisé

en ce qu'au moins l'un (8) des deux organes de positionnement (7, 8) travaille dans le sens d'embrayer son embrayage (4); et en ce que la vanne de commutation correspondante (10) est reliée avec la conduite de retour (14) par l'intermédiaire d'un clapet antiretour (25).

6. Dispositif de commutation selon la revendication 5,

caractérisé

en ce qu au clapet antiretour (25) est reliée une conduite d'équilibrage (26) alimentée par la source de pression (pompe 11).

7. Dispositif de commutation selon l'une des revendications 1 à 6,

caractérisé

en ce que sur la conduite d'équilibrage (26) est montée une soupape de limitation de débit (27).

8. Dispositif de commutation selon l'une des revendications 1 à 7,

caractérisé

en ce que l'embrayage (1) du mécanisme d'équilibrage (2) peut être embrayé par la force d'un ressort tandis que l'embrayage (4) du premier essieu peut être embrayé par la force résultant de la pression de travail de son organe de positionnement (8).

9. Dispositif de commutation selon la revendication 8,

caractérisé

en ce que, comme moyen constitué d'un clapet à valeur caractéristique d'intervention, on emploie un clapet antiretour (16) qui est disposé de façon à pouvoir intervenir sur une conduite de court-circuit (15) reliant les deux organes de positionnement (7, 8) l'un à l'autre et qui, en agissant contre une force de précontrainte qui s'exerce en direction de l'organe de positionnement (8) de l'embrayage (4) du premier essieu, peut être activé par la pression de travail de l'autre organe de positionnement (7).

10. Dispositif de commutation selon l'une des revendications 1 à 9,

caractérisé

en ce que la résistance d'étranglement (diaphragme 19) mise en circuit entre la conduite d'alimentation sous pression (12) et la vanne de commutation (9) de l'organe de positionnement (7) de l'embrayage (1) du mécanisme d'équilibrage (2) est plus petite que la résistance d'étranglement (diaphragmes 17, 18) qui est mise en circuit entre la conduite d'alimentation sous pression (12) et l'autre vanne de commutation (10).

11. Dispositif de commutation selon l'une des revendications 1 à 10,

caractérisé

en ce que la résistance d'étranglement (diaphragme 22) que l'on peut mettre en circuit entre l'organe de positionnement (8) de l'embrayage (4) du premier essieu et la conduite de retour (14) est disposée sur une conduite de travail sous pression (28) reliant l'organe de positionnement (8) avec sa vanne de commutation (10) de façon telle que le clapet antiretour (16) employé comme clapet à valeur caractéristique d'intervention est relié à l'organe de positionnement (8) par l'intermédiaire de la résistance d'étranglement (diaphragme 22), tandis qu'il est relié directement à la vanne de commutation (10) par l'intermédiaire du tronçon correspondant (29) de la conduite de travail sous pression (28).

12. Dispositif de commutation selon l'une des revendications 1 à 11,

caractérisé

en ce que la résistance d'étranglement (vanne d'étranglement 30) mise en circuit entre la vanne de commutation (9) de l'organe de positionnement (7) de l'embrayage (1) du mécanisme d'équilibrage (2) et la conduite de retour (14) peut, en fonction de la pression de travail de l'organe de positionnement (7), commuter entre le petite valeur de la résistance (diaphragme 24) en présence de valeurs assez élevées de la pression (supérieures à 25 bars) et une plus grande valeur de la résistance (diaphragme 23) en présence de valeurs de la pression inférieures à une valeur limite (25 bars).

13. Dispositif de commutation selon l'une des revendications 1 à 12, dans lequel au moins un embrayage prévu pour bloquer un mécanisme d'équilibrage entre les essieux, lorsque l'essieu est entraîné en mode standard, peut être manoeuvré par un organe de positionnement, en fonction de l'unité de commande, de façon telle que dans un autre mode correspondant à l'entraînement de toutes les roues avec blocage transversal du différentiel de l'essieu arrière, les trois embrayages sont embrayés, tandis que

caractérisé

en ce que l'organe de positionnement (33) de l'embrayage (31) du mécanisme (32) d'équilibrage entre essieux, d'une part, est entraîné par la force du fluide sous pression et, d'autre part, est relié, par l'intermédiaire d'une autre vanne de commutation (34) que l'unité de commande (6) peut activer, soit avec la conduite d'alimentation sous pression (12) soit avec la conduite de retour (14).

14. Dispositif de commutation selon l'une des revendications 1 à 13,

caractérisé

en ce que la vanne de commutation (34) de l'embrayage (31) du mécanisme (32) d'équilibrage entre essieux est reliée avec la conduite de retour (14) par l'intermédiaire d'un clapet antiretour (35).

15. Dispositif de commutation selon l'une des revendications 1 à 14,

caractérisé

en ce que la conduite d'alimentation sous pression (12) est reliée à un accumulateur de pression (36) qu'une pompe (11) peut charger par l'intermédiaire d'une vanne de charge (37) travaillant en fonction de la pression de l'accumulateur; en ce que la vanne de charge (35) sert à permettre de poursuivre l'alimentation en pression d'un récepteur (régulation du niveau 39) indépendant de l'entraînement des essieux du véhicule et relié au réservoir (13) par l'intermédiaire d'une conduite de retour auxiliaire (38); en ce que la conduite d'équilibrage (26) est un embranchement sur la conduite sous pression de pompage (40) qui va de la pompe (11) à la vanne de charge (37); et en ce qu'un clapet antiretour (41) est mis en circuit sur la conduite de retour auxiliaire (38).

16. Dispositif de commutation selon l'une des revendications 1 à 15,
caractérisé
en ce que, dans la conduite sous pression (40) provenant de la pompe est mise en circuit une vanne de service qui peut commuter entre une position de fonctionnement (42) reliant la pompe (11) avec la vanne de charge (37) et une position de contrôle (43) reliant aussi bien la pompe (11) que la vanne de charge (37) au réservoir (13).

17. Dispositif de commutation selonl'une des revendications 1 à 16,
caractérisé
en ce que la vanne de service (44) présente, pour relier la conduite sous pression d'alimentation (12) avec le réservoir (13), un passage (45) qui est obturé en position de fonctionnement (42) et ouvert en position de contrôle (43).

18. Dispositif de commutation selon l'une des revendications 1 à 17,
caractérisé
en ce que la conduite d'alimentation sous pression (12) est reliée avec un manostat (46) qui agit sur l'unité de commande (6).

19. Dispositif de commutation selon l'une des revendications 1 à 18,
caractérisé
en ce que la conduite d'alimentation sous pression (12) est reliée avec la conduite de retour (14) par une soupape de limitation de pression (47).

20. Dispositif de commutation selon l'une des revendications 1 à 19,
caractérisé
en ce qu'entre la vanne de commutation (9) de l'embrayage (1) du mécanisme central d'équilibrage (2) et la vanne d'étranglement (30) reliée à la conduite de retour (14) est mis en circuit un clapet antiretour (65) qui est bloquée en direction de la vanne de commutation (9).

0 236 564